# EUROPÄISCHE PATENTANMELDUNG

(11) **EP 1 344 907 A1**
(43) Veröffentlichungstag der Anmeldung: **17.09.2003**
(21) Anmeldenummer: 02450056.3
(22) Anmeldetag: 12.03.2002
(51) Int. Cl.: F01N 3/022, F01N 3/035, B01D 46/10, B01D 46/12, B01D 39/20, B01J 23/00

(54) **Vorrichtung zum Entfernen von Kohlenstoffpartikeln aus Abgasen**

(71) Anmelder: Capital Technology GmbH, 1025 Sant-Sulpice (CH)
(72) Erfinder: Schneider, Siegfried, 2340 Mödling (AT)
(74) Vertreter: Patentanwälte BARGER, PISO & PARTNER

(57) **Zusammenfassung**

Die Erfindung betrifft eine Vorrichtung zur Reinigung von Abgasen von Dieselmtoren von Russ.

Die Erfindung ist dadurch gekennzeichnet, dass der Abgasstrom durch eine offenporige und/oder offenzellige Matrix, beispielsweise einen Metallschaum, mit einer Porosität zwischen 20 und 100 Poren pro Inch (7,8 bis 39.4 Poren pro cm) geleitet wird, und dass die Oberfläche der Matrix zumindest zum Teil katalytische Eigenschaften für die Oxidation von Russ aufweist.

In einer Ausgestaltung ist vorgesehen, dass die Matrix aus einer Legierung mit

| | |
|---|---|
| 18-23 Gew.-% Chrom, | 4-8, bevorzugt 7-8, Gew.-% Vanadium, |
| 0,2-1,5 Gew.-% Cer, | 0,8-1,5 Gew.-% Silizium, |
| 0,8-1,5 Gew.-% Bor, | |

der Rest Eisen und geringfügige, in der Metallurgie üblicherweise auftretende Verunreinigungen besteht.

## Beschreibung

Die Erfindung betrifft eine Vorrichtung zur Entfernung von Kohlenstoffpartikeln, insbesondere Russ, aus dem Abgasstrom von Dieselmotoren und ein Verfahren zur Herstellung der Vorrichtung.

Dieselmotoren haben sich sowohl im Verkehrswesen als auch bei der Gewinnung elektrischer Energie in vielen Bereichen weltweit durchgesetzt. Dabei sind die Größen und die Betriebsbedingungen der verschiedenen Dieselmotore voneinander extrem unterschiedlich. Es gibt relativ kleinvolumige, gegebenenfalls turbo-aufgeladene Dieselmotoren, die in Personenkraftwagen eingebaut sind, es gibt größervolumige, teilweise ebenfalls turbo-aufgeladene Dieselmotoren im LKW-Verkehr über lange Strecken, es gibt Dieselmotoren, die in Autobussen oder Taxis hauptsächlich im städtischen _{"}stop and go" Verkehr eingesetzt werden und es gibt schließlich die extrem großvolumigen Schiffsdieselmotoren oder Stationärdieselmotoren, die über viele Monate oder Jahre mit konstanter oder nahezu konstanter Drehzahl und Last betrieben werden.

Allen Dieselmotoren gemein ist ein im Vergleich zum Benzinmotor hoher Ausstoß von unverbrannten Kohlenstoffpartikeln, insbesondere Russ, mit dem Abgas, der als gesundheitsgefährdend und die umweltschädigend angesehen wird. Die Reduktion oder gar vollständige Vermeidung dieses im Folgenden in der Beschreibung und den Ansprüchen der Einfachheit halber mit _{"}Russ" bezeichneten Ausstoßes ist bisher unter den täglichen Einsatzbedingungen nicht auf wirtschaftlich vertretbare Weise möglich gewesen, obwohl es eine ganze Reihe von Versuchen gegeben hat.

Eine Vielzahl von Vorschlägen hat verschiedene Filter oder Abscheidevorrichtungen (Zyklon) für den Russ vorgesehen, doch sind spürbare Abscheideerfolge nur mit drastischen Verschlechterungen der Abgasführung und stets mit der Gefahr der schlagartigen Entzündung des angesammelten Russes zu erkaufen gewesen. Insbesondere bei mangelhafter Wartung der Filter bzw. Abscheider stellte sich diese Gefahr als so groß heraus, dass sich diese Vorrichtungen bis heute nicht haben durchsetzen können.

Andere Vorschläge zur Lösung dieses Problems betrafen die Verbrennung des Russes, wozu Temperaturen über 550°C notwendig sind. Diese Temperaturen wurden zumeist durch den Betrieb des Dieselmotors selbst erzeugt, was es mit sich brachte, dass gerade in der Start- und Kaltbetriebsphase, wenn der Ausstoß an Russ besonders hoch ist, die Verbrennung des Russes äußerst mangelhaft erfolgte. Darüber hinaus zeigte sich, dass alle bisher verwendeten Oxidationsvorrichtungen dazu neigten, sich nach und nach mit Russ zumindest teilweise zu verstopfen, wobei die Gefahr der schlagartigen Oxidation des angesammelten Russes (Temperaturentwicklung bis 1600°C) besonders hoch war. Es kam auf diese Weise bei einigen Autobusse städtischer Verkehrsbetriebe während des Betriebes zu derartigen Spontanreaktionen.

Die Erfindung hat somit das Ziel, eine bei möglichst niedrigen Temperaturen den Russ oxidierende Vorrichtung anzugeben, die gegen Verstopfungen bestmöglich gerüstet ist und von ihren Abmessungen, ihrer Masse und ihren Gestehungskosten her ökonomisch im täglichen Einsatz sinnvoll verwendbar ist.

Erfindungsgemäß werden diese Ziele dadurch erreicht, dass die Vorrichtung aus zumindest einem Körper mit offenzelliger bzw. offenporiger Struktur, Matrix genannt, beispielsweise aus Metallschaum bzw. -schwamm (auch im Deutschen wird oft die englische Bezeichnung _{"}metal foam" verwendet) mit offenen Poren mit einer Porosität zwischen 20 und 100 Poren pro Inch (wird durch Zählen der Poren entlang einer Linie bestimmt) besteht, wobei die Matrix gegen die in den Abgasen von Dieselmotoren auftretenden chemischen Verbindungen beständig ist und die auftretenden Temperaturen bis 900° auf Dauer erträgt und dass die Matrix entweder aus katalytisch wirksamen Material besteht und/oder zumindest teilweise mit einem Katalysator beschichtet ist.

Als Katalysator kann beispielsweise Platin, eine Platin-Ruthenium-Legierung (beispielsweise 40:60), eine Platin-Ruthenium-Cer-Legierung (beispielsweise 40:55:5), eine Cer-Vanadium-Legierung (beispielsweise 50:50) (alle Angaben Gewichtsanteile) verwendet werden.

Durch diese Vorrichtung ist nun aufgrund der extremen Größe der insgesamt vom Abgasstrom berührten Oberfläche des Metallschaumes und aufgrund der vielfachen Richtungsänderungen des Abgasstromes sichergestellt, dass die im Abgasstrom enthaltenen Russpartikeln im Zuge des Durchströmens des Abgasstromes durch den Metallschaum vielfach die Oberfläche des Metallschaumes kontaktieren und dabei katalytisch oxidiert werden. Es ist andererseits durch die große Porenweite des Metallschaumes sichergestellt, dass selbst bei hoher Belastung mit Russ ein Verstopfen der Kanäle des Metallschaumes nicht oder zumindest in keinem merklichen Ausmaß auftritt. Dazu kommt noch, dass selbst wenn es verschiedentlich und vereinzelt zu Verstopfungen kleinerer Gänge des Metallschaumes kommt, durch den dadurch gegebenen innigen Kontakt zwischen den Russpartikeln und der mit dem Katalysator versehenen Oberfläche des Metallschaumes eine rasche und rasch fortschreitende Oxidation des Russes und damit ein Abbau der Verstopfung auftritt.

Zufolge der Natur des Katalysators und seiner Fähigkeit, bereits bei niedrigen Temperaturen von 200 bis 300°C die erwünschte Oxidation des Russes zu bewirken, besteht selbst im Falle etwaiger auftretender hartnäckiger Verstopfungen in Bereichen der Matrix, in denen unter Umständen ihre Offenporigkeit geringer als angestrebt ist, nicht zu den gefürchteten schlagartigen Oxidationen mit einer Gefährdung für die Vorrichtung und ihre Betreiber.

Als Matrix können bevorzugt Metallschwämme verwendet werden, doch sind auch Wickel aus Streckmetall, Folienwickel, Stanzfolien, 3 D-Gewebe u.dergl. gut verwendbar. Metallschwämme sind in der Technik seit einiger Zeit bekannt, Veröffentlichungen betreffend diese Gebilde sind insbesondere von der TH Clausthal erschienen. Sie werden durch Aufbringen von Metallpulver auf geschäumten Granulat, anschließendem Verbacken, Trocknen und thermischer Zerstörung des Granulates, gebildet. Ihre Porengröße kann vom Fachmann auf diesem Gebiet in weiten Grenzen beeinflußt werden. Durch das thermische Austreiben des Granulates ist die Offenporigkeit des verbleibenden Metallschaumgerüstes sichergestellt, wobei es aber selbstverständlich zu statistischen Schwankungen kommen kann. Die mechanischen Eigenschaften des Metallschaumes hängen einerseits von der Zusammensetzung des Metalls, andererseits vom Herstellungsverfahren ab und können im Zuge der Herstellung ebenfalls in weiten Grenzen bestimmt und eingehalten werden.

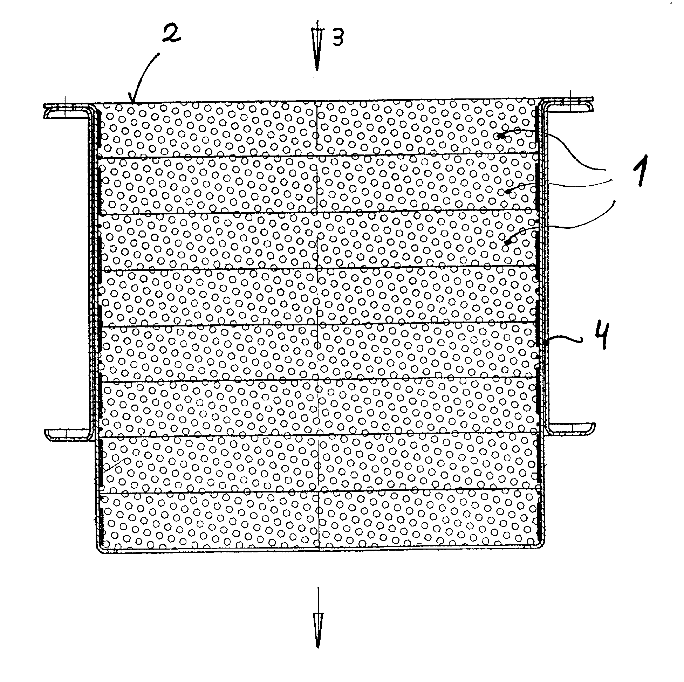

Eine spezielle Ausführungsform der Erfindung ist in der einzigen Figur dargestellt.

Erfindungsgemäß wird nun für die Matrix und insbesondere für den Metallschaum bevorzugt eine Legierung mit
18-23 Gew.-% Chrom,
4-8, bevorzugt 7-8 Gew.-% Vanadium,
0,2-1,5 Gew.-% Cer,
0,8-1,5 Gew.-% Silizium,
0,8-1,5 Gew.-% Bor,
   der Rest Eisen und geringfügige, in der Metallurgie üblicherweise auftretende Verunreinigungen, verwendet. Ein Metallschaum bzw. eine Matrix aus dieser Legierung weist die notwendigen chemischen und mechanischen Eigenschaften auf und ist in der Lage, während der vorgegebenen hohen Lebensdauer (bei LKW's werden heute Auspuffanlagen mit einer Lebensdauer von zumindest 500.000 km verlangt), die geforderte Oxidation des Russes im Abgas zu sichern. Es hat sich herausgestellt, dass diese Legierung auch in den Bereichen, in denen sie nicht oder nur unvollständig vom Katalysator bedeckt ist, die Oxidation auftreffender Russpartikel fördert und damit zur Herstellung der erfindungsgemäßen Vorrichtung besonders geeignet ist.
   Die Katalysatoren werden bevorzugt mittels Plasmaauftrags auf die Matrix, zumeist ein Metallschaum, aufgebracht. Durch den Plasmaauftrag, der bevorzugt auf zumindest eine der Stirnflächen der Matrix erfolgt, dringt der Katalysator in den porösen Metallschaum vor und lagert sich an der metallischen Oberfläche auch im Inneren des Metallschaumes ab. Je nach den Verfahrensbedingungen werden dabei die Oberflächen des Metallschaumes bis in eine Tiefe von einigen mm oder auch im cm-Bereich zuverlässig und im Wesentlichen in diesem Bereich punktuell dotiert. Dadurch wird die Oberfläche weiter vergrössert und durch die erhöhte Rauhigkeit die Strömung für Kontakte zwischen den Russpartikeln und der Oberfläche geeigneter als bei geringer Rauhigkeit.
   Tiefer im Inneren der Matrix lässt die _{"}Qualität" der Beschichtung nach, weshalb die Matrix bevorzugt in Form von relativ dünnen Gebilden (Platten, Scheiben, etc., mit einer Dicke, die etwa das Doppelte der Eindringtiefe des Katalysators beträgt) verwendet wird. Diese Gebilde werden bevorzugt von beiden Stirnseiten her mit dem Katalysator versehen. Durch diese Maßnahme erreicht man eine ausreichend gleichmäßige und qualitativ hochwertige Bedeckung der metallischen Oberfläche der Matrix mit dem Katalysator.
   Es ist aus dem Gesagten klar ersichtlich, dass es nicht notwendig ist, die Matrix aus der oben angegebenen Legierung herzustellen, sondern dass jede Legierung verwendet werden kann die, wie eingangs angeführt, den thermischen und chemischen Beanspruchungen über ausreichend lange Zeit widerstehen kann und die in der Lage ist, eine innige und zuverlässige Verbindung mit dem Katalysator einzugehen.
   Ein geeignetes Aufbringungsverfahren durch Plasmatechnologie ist beispielsweise in der Druckschrift _{"}SULZER METCO Plasmabrenner SM-F210" näher beschrieben und bedarf daher hier keiner ausführlichen Erläuterung. Selbstverständlich ist es für den Fachmann auf dem Gebiet des Plasmabeschichtens in Kenntnis der Erfindung ein Leichtes, andere Verfahren und Werkzeuge auszuwählen.
   Die Vorrichtung selbst besteht, wie in der Figur dargestellt aus zumindest einer Scheibe 1 der mit dem Katalysator versehenen Matrix, wobei die Frontseite 2, von der aus der Katalysator aufgebracht wurde, dem anströmenden Abgas, angedeutet durch den Pfeil 3, entgegen steht. In der Praxis werden zumeist, so wie dargestellt, mehrere solcher Scheiben 1 der Matrix hintereinander in einen zylindrischen oder prismatischen Gehäuse 4 eingebaut, wobei zwischen den einzelnen Scheiben 1 ein geringer Abstand vorgesehen sein kann oder, wie dargestellt, auch nicht. Es ist selbstverständlich möglich und, um der Abhängigkeit von der Zusammensetzung, Temperatur und Russhaltigkeit des zu reinigenden Abgasstromes Rechnung zu tragen, zumeist auch vorteilhaft, Scheiben mit unterschiedlicher Porosität (Poren/cm) und gegebenenfalls unterschiedlicher Beschichtung mit Katalysator zu verwenden.
   Weiters ist es auch möglich, in ein und demselben Gehäuse nicht nur die erfindungsgemäße Vorrichtung, den Konverter, unterzubringen sondern auch den klassischen und bekannten Katalysator zum Abbau der Stickoxide. Auch dieser Katalysator kann auf der erfindungsgemäß verwendeten Matrix, unter Umständen bestehend aus einer anderen Legierung als oben angegeben, aufgebracht sein. Die Wirksamkeit des Katalysators wird durch die stark vergrößerte Oberfläche gegenüber herkömmlichen, aus gewickelten Folien und dergleichen bestehenden Trägern, wesentlich verbessert.
   Es soll abschließend festgehalten werden, dass die verschiedenen in dieser Beschreibung genannten Katalysatoren und auch andere, zum Teil erst in Zukunft entwickelte Katalysatoren zur Oxidation des Kohlenstoffes bei unterschiedlichen Temperaturen und unterschiedlichen Gaszusammensetzungen unterschiedliche Leistung aufweisen. In Kenntnis dieser speziellen Eigenschaften der unterschiedlichen Katalysatoren ist es für den Fachmann auf dem Gebiet der Abgasreinigung in Kenntnis der Erfindung ohne Weiteres möglich, bei der jeweils ins Auge gefassten Anwendung eine solche Aufeinanderfolge unterschiedlich ausgebildeter und unterschiedlich mit Katalysator versehener Metallschwämme vorzusehen, dass die Oxidation des Russes bestmöglich erfolgt.
   Dabei ist stets auch zu bedenken, dass durch diese Oxidation thermische Energie frei wird, die zur Erwärmung der stromabwärts gelegenen Bereiche des Konverters und der anschließenden Abgasanlage führt. Dazu können beispielsweise Schalldämpfer und dergleichen gehören, dieser Teil der Abgasbehandlung stellt aber keinen Teil der Erfindung mehr dar, wenn er auch durch den Abbau des Russes im Abgas günstig beeinflußt wird (Verstopfungsgefahr).
   Selbstverständlich ist es in Kenntnis der Erfindung und bei Berücksichtigung des Anwendungsgebietes möglich, verschiedene Maßnahmen zur Kühlung (Volllastbetrieb in den Tropen) oder auch zur Erwärmung (Müllfahrzeug im kanadischen Winter) des Konverters zu treffen, wenn dies zum Einhalten der Arbeitstemperatur des Konverters günstig oder notwendig ist.
   Zur Bezeichnung _{"}Metallschaum" bzw. _{"}Metallschwamm" ist noch zu bemerken, dass keine genormten oder in der Industrie allgemein anerkannten Zuordnungen bestehen. So wird auf der homepage _{"}metalfoam.net.intro" von John Banhart über die entsprechenden englischen Bezeichnungen und dazu noch über die Bezeichnungen _{"}cellular metal", _{"}porous metal" und _{"}sinter metal" ausführlich referiert und fast resignierend zusammengefaßt, dass _{"}one can try to classify". Aus diesem Grund wird in der Beschreibung und den Ansprüchen die (überwiegende) Offenporigkeit - Offenzelligkeit explizit angegeben.

## Patentansprüche

1. Vorrichtung zur Reinigung von Abgasen von Dieselmtoren von Russ, **dadurch gekennzeichnet, dass** der Abgasstrom durch eine offenporige und/oder offenzellige Matrix, beispielsweise einen Metallschaum, mit einer Porosität zwischen 20 und 100 Poren pro Inch (7,8 bis 39.4 Poren pro cm) geleitet wird und dass die Oberfläche der Matrix zumindest zum Teil katalytische Eigenschaften für die Oxidation von Russ aufweist.

2. Vorrichtung nach Anspruch 1, **dadurch gekennzeichnet, dass** die Matrix aus einer Legierung mit
18-23 Gew.-% Chrom, 4-8, bevorzugt 7-8, Gew.-% Vanadium,
0,2-1,5 Gew.-% Cer, 0,8-1,5 Gew.-% Silizium,
0,8-1,5 Gew.-% Bor,
der Rest Eisen und geringfügige, in der Metallurgie üblicherweise auftretende Verunreinigungen besteht.

3. Vorrichtung nach Anspruch 1 oder 2, **dadurch gekennzeichnet, dass** die Matrix zumindest teilweise mit einem die Oxidation von Russ katalysierenden Überzug versehen ist.

4. Vorrichtung nach Anspruch 3, **dadurch gekennzeichnet, dass** der katalytische Überzug aus Platin, oder einer Platin-Ruthenium-Legierung, insbesondere im Gewichtsverhältnis 40:60, oder einer Platin-Ruthenium-Cer-Legierung, insbesondere im Gewichtsverhältnis 40:55:5 oder einer Cer-Vanadium-Legierung, insbesondere im Gewichtsverhältnis 50:50 besteht.

5. Vorrichtung nach Anspruch 3 oder 4, **dadurch gekennzeichnet, dass** der katalytische Überzug durch Plasmaaufbringen aufgebracht worden ist.

6. Vorrichtung nach einem der voranstehenden Ansprüche, **dadurch gekennzeichnet, dass** die mittlere Porengröße der Matrix um das 100-fache größer ist als der größte zu erwartende Russpartikel.

7. Vorrichtung nach einem der voranstehenden Ansprüche, **dadurch gekennzeichnet, dass** die Matrix Scheibenform aufweist und dass mehrere Scheiben der Matrix in einem Gehäuse in Strömungsrichtung hintereinander angeordnet sind.

8. Vorrichtung nach Anspruch 7, **dadurch gekennzeichnet, dass** zumindest eine der Scheiben an zumindest ihrer dem Abgasstrom entgegen gerichteten Stirnfläche mit einem Katalysator versehen ist.

9. Vorrichtung nach Anspruch 8, **dadurch gekennzeichnet, dass** zumindest eine der Scheiben zumindest in dem Bereich ihrer dem Abgasstrom entgegen gerichteten Stirnfläche mit einem Katalysator versehen ist.
